# EUROPEAN PATENT APPLICATION

(11) **EP 4 246 618 A1**
(43) Date of publication of application: **20.09.2023**
(21) Application number: 23157797.4
(22) Date of filing: 21.02.2023
(51) Int. Cl.: H01M 4/1391, H01M 4/36, H01M 4/525

(54) **METHOD FOR PRODUCING COATED ACTIVE MATERIAL AND METHOD FOR PRODUCING ELECTRODE**

(30) Priority: 18.03.2022 JP 2022043952
(71) Applicant: TOYOTA JIDOSHA KABUSHIKI KAISHA, Aichi-Ken 471-8571 (JP)
(72) Inventor: MURAISHI, Kazuki, Toyota-shi, 471-8571 (JP); KUBOTA, Masaru, Toyota-shi, 471-8571 (JP); SASAKI, Izuru, Osaka, 540-6207 (JP); NAGAO, Kenji, Osaka, 540-6207 (JP)
(74) Representative: J A Kemp LLP

(57) **Abstract**

In a method for producing a coated active material, a coating layer containing Nb is formed on at least a part of a surface of an active material. The method includes: transforming a slurry containing the active material and a coating solution (11b, 21b, 31b) containing Nb into droplets to obtain slurry droplets (11, 21, 31); drying the slurry droplets (11, 21, 31) in a heated gas stream to obtain a precursor; and baking the precursor. When obtaining the slurry droplets (11, 21, 31), a temperature of the slurry before the slurry is transformed into droplets is 5°C or more and less than 25°C.

## Description

### BACKGROUND OF THE INVENTION

### 1. Field of the Invention

The present disclosure relates to methods of producing a coated active material and methods of producing an electrode.

### 2. Description of Related Art

A technique of forming a coating layer such as oxide on the surface of an active material to be used in a battery is known in the art. For example, Japanese Patent No. 6269645 (JP 6269645 B) discloses a method for producing an active material composite (coated active material) by drying a specific coating solution while spraying the coating solution onto the surface of an active material using a tumbling fluidized bed coater and then baking the resultant active material.

### SUMMARY OF THE INVENTION

In the production method using a tumbling fluidized bed coater disclosed in JP 6269645 B, it is necessary to spray the coating solution at a low rate in order to reduce granulation of the active material. As a result, it may take a long time to produce a coated active material. In this regard, the inventors examined a method (spray drying method) in which a slurry containing an active material and a coating solution is transformed into droplets and the slurry droplets are dried in a heated gas stream, as will be described later. The spray drying method is advantageous in that a coated active material can be produced in a shorter time than the tumbling fluid coating method. In the spray drying method, however, a nozzle may get clogged, which may reduce productivity.

The present disclosure provides a method for producing a coated active material with high productivity and a method for producing an electrode containing the coated active material.

In a method for producing a coated active material according to an aspect of the present disclosure, a coating layer containing niobium (Nb) is made on at least a part of a surface of an active material. The method includes: transforming a slurry containing the active material and a coating solution containing Nb into droplets to obtain slurry droplets; drying the slurry droplets in a heated gas stream to obtain a precursor; and baking the precursor. When obtaining the slurry droplets, a temperature of the slurry before the slurry is transformed into droplets is 5°C or more and less than 25°C.

According to the present disclosure, a coated active material can be produced with high productivity by adjusting the temperature of the slurry before the slurry is transformed into droplets to a predetermined range.

In the above disclosure, the active material may contain a transition metal.

In the above disclosure, the active material may be a lithium-transition metal composite oxide containing lithium (Li), a transition metal, and oxygen (O).

In the above disclosure, the active material may contain at least one of the following elements as the transition metal: nickel (Ni), cobalt (Co), and manganese (Mn).

In the above disclosure, the active material may contain at least Ni as the transition metal.

In the above disclosure, a Ni content of the active material may be 50 mol% or more based on a total of metal elements, other than Li, contained in the active material.

A method for producing an electrode according to an aspect of the present disclosure includes: mixing the coated active material produced by the above method for producing a coated active material and a solid electrolyte to obtain an electrode mixture; and forming the electrode mixture.

In the above disclosure, the solid electrolyte may be a sulfide solid electrolyte containing Li and sulfur (S) as constituent elements.

The present disclosure provides a method for producing a coated active material with high productivity and a method for producing an electrode containing the coated active material.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a process flowchart of a method for producing a coated active material according to the present disclosure;
FIG. 2A is a graph showing the relationship between the stirring time (immersion time) during slurry production and the pH of the slurry;
FIG. 2B is a graph showing the relationship between the stirring time (immersion time) during slurry production and the pH of the slurry;
FIG. 3A illustrates a form of a slurry droplet in the present disclosure;
FIG. 3B illustrates a form of a slurry droplet in the present disclosure; and
FIG. 3C illustrates a form of a slurry droplet in the present disclosure.

### DETAILED DESCRIPTION OF EMBODIMENTS

As described above, the method for producing a coated active material according to the related art sometimes requires a long time to produce a coated active material. In this regard, the applicant found that a method for producing a coated active material including: a first step of transforming a slurry containing an active material and a coating solution into droplets to obtain slurry droplets; a second step of drying the slurry droplets in a heated gas stream to obtain a precursor; and a third step of baking the precursor can reduce the production time (Japanese Patent Application No. 2021-130363).

In this method for producing a coated active material, however, a nozzle used to transform the slurry into droplets may get clogged when a precipitate forms in the slurry. As a result, productivity may decrease.

Hereinafter, a method for producing a coated active material according to the present disclosure will be described in detail.

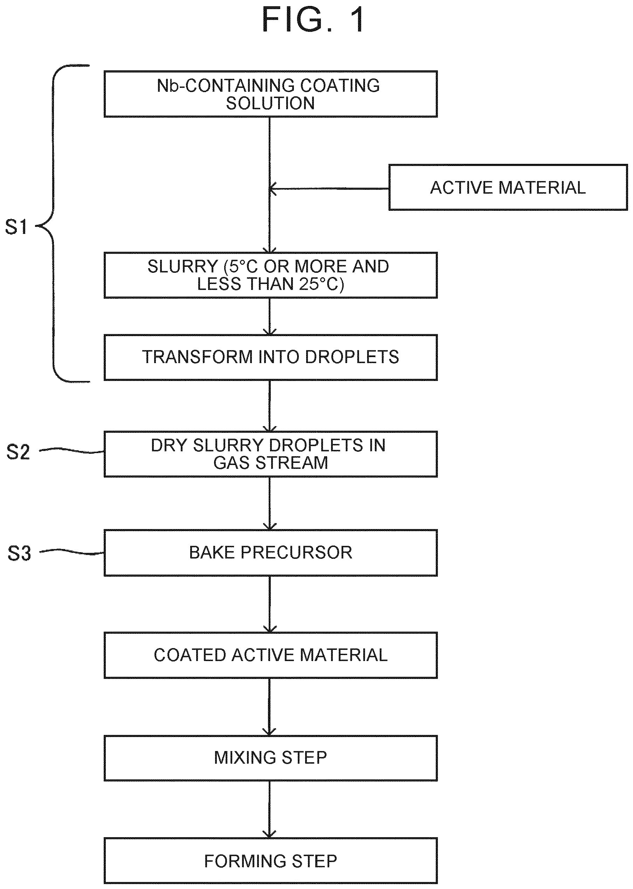

FIG. 1 is a process flowchart of the method for producing a coated active material according to the present disclosure. The method for producing a coated active material according to the present disclosure includes: a first step S 1 of transforming a slurry containing an active material and a coating solution containing Nb into droplets to obtain slurry droplets; a second step S2 of drying the slurry droplets in a heated gas stream to obtain a precursor; and a third step S3 of baking the precursor. A coated active material with a coating layer containing Nb on at least a part of the surface of the active material is produced by the method for producing a coated active material according to the present disclosure. In the present disclosure, the temperature of the slurry before transforming the slurry into droplets in the first step is 5°C or more and less than 25°C.

The applicant found that, when preparing a slurry containing an active material and a coating solution containing Nb, elements contained in the active material (e.g., nickel (Ni), lithium (Li), and impurities) dissolve in the coating solution, and a nozzle may get clogged when a precipitate forms as a result of a reaction of the dissolved elements with a niobium source contained in the coating solution.

The applicant also found that the pH of the slurry may increase due to the dissolution of the elements contained in the active material. The pH of the slurry tends to increase sharply, particularly when the active material is a high-nickel active material with a high Ni content. As the pH of the slurry increases, the state of the niobium source contained in the coating solution (e.g., the state of a niobium peroxo complex or niobium alkoxide) becomes unstable. As a result, an agglomerated precipitate of the niobium source tends to form, and nozzle clogging tends to occur. When sulfur (S) is contained as an impurity in the active material, a precipitate may form as a result of a reaction of S dissolved from the active material with the niobium source.

In this regard, in the present disclosure, the dissolution rate of the elements contained in the active material (e.g., Ni, Li, and impurities) can be reduced by adjusting the temperature of the slurry before transforming the slurry into droplets to a predetermined range. As a result, precipitate formation can be reduced. Therefore, nozzle clogging can be reduced, and a coated active material can be produced with high productivity.

### 1. First Step

This step is a step of transforming a slurry containing an active material and a coating solution containing Nb into droplets to obtain slurry droplets.

### (1) Slurry

In the present disclosure, the temperature (liquid temperature) of the slurry before transforming the slurry into droplets is usually 5°C or more, and may be 10°C or more, or 15°C or more. The temperature (liquid temperature) of the slurry before transforming the slurry into droplets is usually less than 25°C, and may be 20°C or less. When the temperature of the slurry before transforming the slurry into droplets is too high, the dissolution rate of the elements contained in the active material increases. Therefore, an agglomerated precipitate of the niobium source tends to form, and nozzle clogging tends to occur. On the other hand, when the temperature of the slurry before transforming the slurry into droplets is too low, the slurry solidifies, making it difficult to transform the slurry into droplets.

The method for adjusting the temperature of the slurry before transforming the slurry into droplets to the above range is not particularly limited. For example, the slurry may be prepared by mixing and stirring the active material and the coating solution while cooling a stirring vessel so that the temperature (liquid temperature) of the slurry falls within the above range.

In the present disclosure, it is preferable that the temperature of the slurry be within the above range during the period from preparation of the slurry until immediately before transformation of the slurry into droplets. The temperature of the slurry may or may not be held constant as long as the temperature of the slurry is within the above temperature range during the period from preparation of the slurry until immediately before transformation of the slurry into droplets.

The "slurry" is a solid-liquid mixture or suspension containing the active material and the coating solution, and may be any material as long as it is fluid enough to be transformed into droplets. In the method of the present disclosure, the slurry may a material that is fluid enough to be transformed into droplets using, for example, a spray nozzle. The slurry may contain some solid component or liquid component in addition to the active material and the coating solution.

The solid content concentration that allows transformation of the slurry into droplets can vary depending on the type of active material, the type of coating solution, the conditions for transforming the slurry into droplets (type of device to be used to transform the slurry into droplets), etc. The solid content concentration of the slurry is not particularly limited, and may be, for example, 1 wt% or more, 10 wt% or more, 20 wt% or more, 30 wt% or more, 40 wt% or more, or 50 wt% or more, and may be 70 wt% or less, 60 wt% or less, 50 wt% or less, or 40 wt% or less.

### (2) Active Material

The active material may be either a positive electrode active material or a negative electrode active material. The active material preferably contains a metal (metal element). Examples of the metal include Li, transition metals, and metals (including metalloids) of groups 12 to 16 in the periodic table. The active material preferably contains Li. The active material may contain oxygen (O). That is, the active material may be an oxide. It is particularly preferable that the active material be a lithium-transition metal composite oxide containing Li, a transition metal, and O. Examples of the transition metal include Ni, cobalt (Co), manganese (Mn), iron (Fe) and vanadium (V). The active material preferably contains at least one of the following elements as a transition metal: Ni, Co, and Mn. The active material preferably contains at least Ni as a transition metal. An example of the metals of groups 12 to 16 in the periodic table is aluminum (Al). The active material is preferably a lithium-transition metal composite oxide containing Li, Ni, Co, Mn, and O, or a lithium-transition metal composite oxide containing Li, Ni, Co, Al, and O.

The crystal structure of the active material is not particularly limited, but examples of the crystal structure of the active material include layered rock-salt structure, spinel structure, and olivine structure.

When the active material contains Ni, the Ni content of the active material is, for example, 30 mol% or more based on the total of the metal elements, other than Li, contained in the active material. For example, when the active material is LiNi_{1/3}Co_{1/3}Mn_{1/3}O₂, the Ni content of the active material is 33 mol%. In the present disclosure, it is particularly preferable that the active material be a high-nickel active material with a high Ni content. The "high-nickel active material" means an active material with a Ni content of 50 mol% or more. The Ni content of the high-nickel active material may be 60 mol% or more, 70 mol% or more, 80 mol% or more, 90 mol% or more, or 100 mol%.

Examples of the high-nickel active material include Li(Ni_{α}Co_{β}Mn_{γ})O₂ (α, β, and γ satisfy 0.5 ≤ α, 0 < β, 0 < γ, 0 < β + γ ≤ 0.5, and α + β + γ = 1), and Li(Ni_{α}Co_{β}Al_{γ})O₂ (α, β, and γ are 0.5 ≤ α, 0 < β, 0 < γ, 0 < β + γ ≤ 0.5, and α + β + γ = 1). In these general formulas, α is 0.6 or more, 0.7 or more, 0.8 or more, or 0.9 or more. LiNi_{0.8}Mn_{0.15}Co_{0.05}O₂, LiNi_{0.8}Co_{0.1}Mn_{0.1}O₂, LiNi_{0.6}Co_{0.2}Mn_{0.2}O₂, LiNi_{0.8}Co_{0.1}Al_{0.1}O₂, LiNi_{0.8}Co_{0.15}Al_{0.05}O₂, etc. are particularly preferable.

Hereinafter, how the pH of the slurry changes when the slurry is prepared without temperature adjustment will be described by comparing when the active material is a high-nickel active material and when the active material is an active material other than the high-nickel active material.

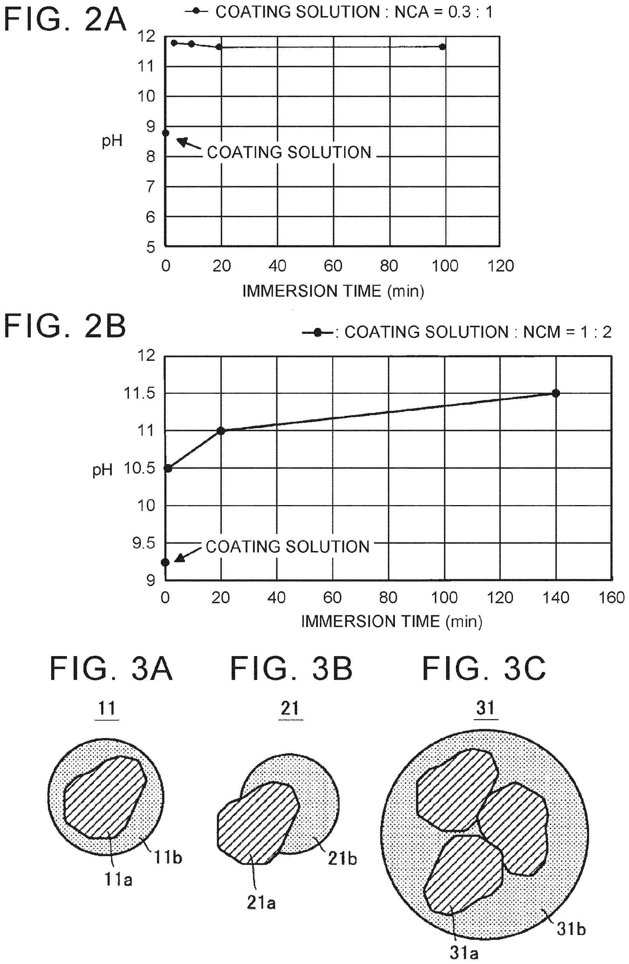

When the active material is a high-nickel active material, the pH of the slurry may increase sharply as the elements contained in the active material dissolve when mixing the coating solution and the high-nickel active material to prepare the slurry. FIG. 2A is a graph showing the relationship between the immersion time of a high-nickel active material (LiNi_{0.8}Co_{0.1}Al_{0.1}O₂ (NCA)) in a coating solution and the pH of the slurry. It can be seen from FIG. 2A that the pH of the slurry reaches its maximum value almost simultaneously with the immersion. As a result, the state of the niobium source in the coating solution becomes more unstable, and an agglomerated precipitate of the niobium source tends to form. Accordingly, the effects of the present disclosure are significant when the active material is a high-nickel active material.

FIG. 2B is a graph showing the relationship between the stirring time (immersion time) and the pH of the slurry when an active material other than the high-nickel active material (LiNi_{1/3}Co_{1/3}Mn_{1/3}O₂ (NCM)) and a coating solution were mixed in a ratio of coating solution:NCM = 1:2 (weight ratio) and stirred. It can be seen from FIG. 2B that, even when the active material is an active material other than the high-nickel active material, the pH of the slurry gradually increases with stirring when mixing the coating solution and the active material to prepare the slurry. It is therefore presumed that, even when an active material other than the high-nickel active material is used, a nozzle gets clogged after long use.

The active material of the present disclosure may contain impurities. An example of the impurities is sulfur (S). For example, S is contained in a starting material that is used when producing the active material, or is contained in a chemical that is used in a synthesis process, and is an impurity that is inevitably contained in the active material. S is presumed to be contained in the active material in the form of, for example, sulfate ions (SO₄²⁻).

Of the active materials mentioned above, a material with a relatively high charge and discharge potential can be used as a positive electrode active material, and a material with a relatively low charge and discharge potential can be used as a negative electrode active material. Only one of the active materials mentioned above may be used alone, or two or more of these may be used in combination. The active material may be an active material that is used for sulfide all-solid-state batteries.

The shape of the active material is not particularly limited as long as the slurry can be transformed into droplets. For example, the active material may be in the form of particles. The active material particles may be solid particles or hollow particles. The active material particles may be primary particles or secondary particles that are agglomerates of a plurality of primary particles. The average particle diameter (D50) of the active material particles may be, for example, 1 nm or more, 5 nm or more, or 10 nm or more, and may be 500 µm or less, 100 µm or less, 50 µm or less, or 30 µm or less. The average particle diameter D50 is the particle size (median particle size) at 50% of the volume-based cumulative particle size distribution obtained by a laser diffraction and scattering method.

### (3) Coating Solution

The coating solution contains Nb, and forms, through gas stream drying and baking that will be described later, a coating layer that performs a predetermined function on the surface of the active material. The coating layer contains Nb, and usually further contains Li. For example, the coating layer may be a layer made of an oxide containing Li and Nb and having a function to reduce an increase in interfacial resistance between the active material and other material. The coating layer may further contains other element. A specific example of other element is at least one selected from the group consisting of boron (B), carbon (C), Al, silicon (Si), phosphorus (P), S, titanium (Ti), zirconium (Zr), molybdenum (Mo), tantalum (Ta), and tungsten (W).

In the case where a layer made of an oxide containing Li and Nb is formed on the surface of the active material, the coating solution may contain a lithium source and a niobium source.

The coating solution may contain lithium ions as a lithium source. For example, a coating solution containing lithium ions as a lithium source may be obtained by dissolving a lithium compound such as LiOH, LiNO₃, or Li₂SO₄ in a solvent. Alternatively, the coating solution may contain a lithium alkoxide as a lithium source.

The coating solution may contain a niobium peroxo complex as a niobium source. The coating solution may contain a niobium alkoxide as a niobium source.

The molar ratio of the lithium source to the niobium source in the coating solution is not particularly limited, but may be, for example, Li:Nb = 1:1. Hereinafter, the following coating solutions will be described as examples: (i) a coating solution containing lithium ions and a niobium peroxo complex, and (ii) a coating solution containing a lithium alkoxide and a niobium alkoxide.

### (i) Coating solution containing lithium ions and a niobium peroxo complex

The coating solution may be obtained by, for example, preparing a transparent solution using a hydrogen peroxide solution, niobic acid, ammonia water, etc., and then adding a lithium compound to the transparent solution. For example, the structural formula of the niobium peroxo complex ([Nb(O₂)₄]³⁻) is as follows.

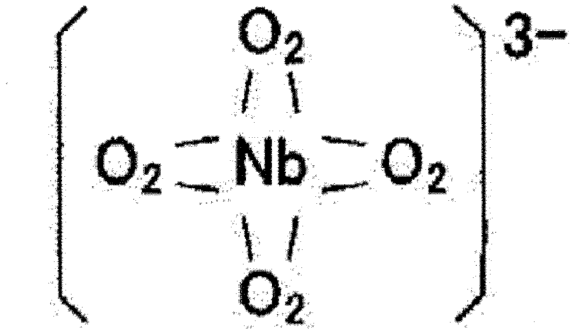

### (ii) Coating solution containing a lithium alkoxide and a niobium alkoxide

The coating solution may be obtained by, for example, dissolving ethoxylithium powder in a solvent and then adding a predetermined amount of pentaethoxyniobium to the resultant solution. In this case, examples of the solvent include dehydrated ethanol, dehydrated propanol, and dehydrated butanol.

### (4) Transformation of Slurry into Droplets

"Transformation of the slurry into droplets" means transforming the slurry containing the active material and the coating solution into drops containing the active material and the coating solution.

An example of the method for transforming the slurry containing the active material and the coating solution into droplets in the first step is a method in which the slurry containing the active material and the coating solution is sprayed using a spray nozzle. Examples of the method for spraying the slurry using a spray nozzle include, but are not limited to, a pressure nozzle method, a two-fluid nozzle method, and a four-fluid nozzle method. The four-fluid nozzle method is preferred in the present disclosure.

In the case where the slurry is sprayed using a spray nozzle, the nozzle diameter is not particularly limited. The nozzle diameter may be, for example, 0.1 mm or more, or 1 mm or more. The nozzle diameter may be 10 mm or less, or 1 mm or less. The spray rate of the slurry is also not particularly limited. The spray rate of the slurry may be the same as the rate at which the slurry is supplied to the spray nozzle. The spray rate may be, for example, 0.1 g/sec or more, or 1 g/sec or more. The spray rate may be 5 g/sec or less, or 0.5 g/sec or less. The spray rate may be adjusted according to the viscosity and solid content concentration of the slurry, the nozzle dimensions, etc.

In the method of the present disclosure, transformation of the slurry into droplets (first step) and gas stream drying (second step) may be performed using, for example, a spray dryer. The type of the spray dryer is not particularly limited, and examples of the spray dryer include spray dryers using the spray nozzles mentioned above.

### (5) Slurry Droplets

The "slurry droplets" are drops of the slurry containing the active material and the coating solution. The sizes of the slurry droplets are not particularly limited. The diameters (equivalent spherical diameters) of the slurry droplets may be, for example, 0.5 µm or more, or 5 µm or more. The diameters of the slurry droplets may be 5000 µm or less, or 1000 µm or less. The diameters of the slurry droplets can be measured using, for example, a two-dimensional image obtained by imaging the slurry droplets. The diameters of the slurry droplets can also be measured using, for example, a laser diffraction particle size analyzer. Alternatively, the droplet diameters can be estimated from, for example, the operating conditions of the device that transforms the slurry into droplets.

In the method of the present disclosure, one slurry droplet may contain, for example, one active material particle and the coating solution adhering to this active material particle, or may contain a plurality of active material particles (particle group) and the coating solution adhering to these active material particles. Hereinafter, examples of the form of the slurry droplet will be described.

As shown in FIG. 3A, a slurry droplet 11 may contain one active material particle 11a and a coating solution 11b adhering to the active material particle 11a. The coating solution 11b may cover the entire surface of the active material particle 11a.

As shown in FIG. 3B, a slurry droplet 21 may contain one active material particle 21a and a coating solution 21b adhering to the active material particle 21a. The coating solution 21b may cover a part of the surface of the active material particle 21a.

As shown in FIG. 3C, a slurry droplet 31 may contain a plurality of active material particles 31a and a coating solution 31b adhering to the active material particles 31a. The coating solution 31b may entirely cover the active material particles 31a, or may partially cover the active material particles 31a.

### 2. Second Step

In the second step, the slurry droplets obtained in the first step are dried in a heated gas stream to obtain a precursor. The "precursor" refers to a precursor of the intended coated active material, and indicates the state before baking in the third step that will be described later. In the second step, the slurry droplets may be dried in a gas stream to obtain a precursor in which a layer containing a component derived from the coating solution is formed on the surface of the active material.

In the method of the present disclosure, "gas stream drying" means drying the slurry droplets while causing them to float in a high-temperature gas stream. "Gas stream drying" can include not only drying but also an operation associated with the use of a dynamic gas stream. Since a heated gas is continuously blown to the slurry droplets or the precursor by gas stream drying, a force is continuously applied to the slurry droplets or the precursor. By using this, the second step may include, for example, breaking (crushing) the slurry droplets or the precursor by gas stream drying.

Specifically, when drying the slurry droplets by a gas stream, one slurry droplet may be crushed into a plurality of slurry droplets each containing an active material particle or an active material particle group, or one agglomerate of the precursor may be crushed into a plurality of precursors each containing an active material particle or an active material particle group. In other words, in the method of the present disclosure, even when the slurry droplets or precursor forms granules, the granules can be crushed by gas stream drying. Therefore, a slurry with a low solid concentration can be used, and the processing rate can be easily increased. Crushing the slurry droplets and the precursor by gas stream drying in the second step as described above facilitates reduction in production time and also facilitates production of a high-performance coated active material.

In the second step, the drying and the crushing may be performed either simultaneously or separately. First gas stream drying in which drying of the slurry droplets is dominant and second gas stream drying in which the crushing of the precursor is dominant may be performed in the second step. The second step may be repeatedly performed.

In the second step, the temperature of the heated gas may be any temperature that is high enough to volatilize the solvent from the slurry droplets. The temperature of the heated gas is, for example, 100°C or more, 110°C or more, 120°C or more, 130°C or more, 140°C or more, 150°C or more, 160°C or more, 170°C or more, 180°C or more, 190°C or more, 200°C or more, 210°C or more, or 220°C or more.

In the second step, the amount of the heated gas to be supplied (flow rate) can be set as appropriate in consideration of the size of the apparatus to be used, the amount of slurry droplets to be supplied, etc. For example, the flow rate of the heated gas is 0.10 m³/min or more, 0.15 m³/min or more, 0.20 m³/min or more, 0.25 m³/min or more, 0.30 m³/min or more, 0.35 m³/min or more, 0.40 m³/min or more, 0.45 m³/min or more, or 0.50 m³/min or more, and 5.00 m³/min or less, 4.00 m³/min or less, 3.00 m³/min or less, 2.00 m³/min or less, or 1.00 m³/min or less.

In the second step, the speed at which the heated gas is to be supplied (flow velocity) can also be set as appropriate in consideration of the size of the apparatus to be used, the amount of slurry droplets to be supplied, etc. For example, the flow velocity of the heated gas may be 1 m/sec or more or 5 m/sec or more in at least a part of the system. The flow velocity of the heated gas may be 50 m/sec or less, or 10 m/sec or less in at least a part of the system.

In the second step, the processing time using the heated gas (drying time) can also be set as appropriate in consideration of the size of the apparatus to be used, the amount of slurry droplets to be supplied, etc. For example, the processing time may be five seconds or less, or one second or less.

In the second step, a heated gas that is substantially inert to the active material and the coating solution may be used. For example, an oxygen-containing gas such as air, an inert gas such as nitrogen or argon, or dry air with a low dew point can be used. In that case, the dew point may be -10°C or lower, -50°C or lower, or -70°C or lower.

An example of the device for performing gas stream drying is, but is not limited to, a spray dryer.

### 3. Third Step

The precursor obtained in the second step is baked in the third step. A coated active material with a coating layer containing Nb on at least a part of the surface of the active material is thus produced.

Examples of the baking device include, but are not limited to, a muffle furnace and a hot plate.

The baking conditions are not particularly limited, and can be set as appropriate according to the type of coated active material.

For example, a precursor is obtained by performing the above first and second steps using oxide particles containing Li and Ni as the positive electrode active material and using a solution containing lithium ions and a niobium peroxo complex as the coating solution. A coating layer containing lithium niobate can be formed on the surface of the oxide containing lithium and nickel, namely the positive electrode active material, by baking the obtained precursor.

In this case, the baking temperature may be, for example, 100°C or more, 150°C or more, 180°C or more, 200°C or more, or 230°C or more. The baking temperature may be 350°C or less, 300°C or less, or 250°C or less. The baking temperature in the third step may be higher than the temperature of gas stream drying in the second step. The baking time may be, for example, one hour or more, two hours or more, three hours or more, four hours or more, five hours or more, or six hours or more. The baking time may be 20 hours or less, 15 hours or less, or 10 hours or less. The baking atmosphere may be, for example, an air atmosphere, a vacuum atmosphere, a dry air atmosphere, a nitrogen gas atmosphere, or an argon gas atmosphere.

### 4. Coated Active Material

A coated active material produced by the method of the present disclosure includes an active material and a coating layer. The coating layer covers at least a part of the surface of the active material, and contains Nb. The thickness of the coating layer is not particularly limited, and may be, for example, 0.1 nm or more, 0.5 nm or more, or 1 nm or more. Alternatively, the thickness of the covering layer may be 500 nm or less, 300 nm or less, 100 nm or less, 50 nm or less, or 20 nm or less. The coating layer may cover 70% or more or 90% or more of the surface of the active material. The coverage of the coating layer on the surface of the active material can be calculated by observing a scanning electron microscope (SEM) image of the cross section of the particle. The coverage of the coating layer on the surface of the active material can also be calculated by calculating the element ratio of the surface by X-ray photoelectric spectroscopy (XPS).

The particle size (D90) of the coated active material is not particularly limited, and may be, for example, 1 nm or more, 10 nm or more, 100 nm or more, 1 µm or more, 2 µm or more, 3 µm or more, 4 µm or more, 5 µm or more, 6 µm or more, 7 µm or more, 8 µm or more, or 9 µm or more. The particle size (D90) of the coated active material may be 50 µm or less, 30 µm or less, 20 µm or less, or 10 µm or less. The particle size D90 is the particle size at 90% of the volume-based cumulative particle size distribution obtained by a laser diffraction and scattering method.

The coating layer of the coated active material may have a plurality of pores. The pores may be, for example, cavities, voids, or gaps. The shape of each pore is not particularly limited. For example, the cross-sectional shape of each pore may be a circle or an ellipse. The size of each pore is not particularly limited. For example, when the cross section of the coated active material is observed, the circle equivalent diameters of the pores may be 10 nm or more and may be 300 nm or less. The number of pores in the coating layer is also not particularly limited. The positions of the pores in the coating layer are also not particularly limited. The pores may be present at the interface between the active material and the coating layer, or may be present in the coating layer. The coating layer may have a plurality of pores located inside (on the active material side of) its outermost surface (opposite surface from to the active material).

The coated active material having the pores is expected to have the following effects. For example, the coated active material having the pores is advantageous for contact between the coated active material and other battery materials. As a result, ion migration may be facilitated. The coated active material having the pores exhibits cushioning properties. This may improve performance when the coated active material is used for an electrode or a battery. For example, even when the active material expands during charging or discharging, or even when a pressure is applied to the coated active material during pressing of an electrode, etc., the cushioning properties reduces the stress that is applied to the active material, so that cracking of the active material can be reduced.

### 5. Method for Producing Electrode

The coated active material produced by the method of the present disclosure can be used as, for example, an active material for electrodes of all-solid-state batteries. A method for producing an electrode of the present disclosure may include: obtaining a coated active material by the method for producing a coated active material described above; mixing the coated active material and a solid electrolyte to obtain an electrode mixture (mixing step); and forming the electrode mixture to obtain an electrode (forming step). Although FIG. 1 shows the mixing step and the forming step, the mixing step and the forming step are not essential components of the method for producing a coated active material according to the present disclosure.

### (1) Mixing Step

In the mixing step, the coated active material and a solid electrolyte are mixed to obtain an electrode mixture. In the mixing step, a conductive aid and a binder may be mixed as desired, in addition to the coated active material and the solid electrolyte. The content of the coated active material in the electrode mixture is not particularly limited, and may be, for example, 40 wt% or more and 99 wt% or less. The coated active material and the solid electrolyte may be dry-mixed, or may be wet-mixed using an organic solvent (preferably a nonpolar solvent).

Various solid electrolytes for all-solid-state batteries can be used as the solid electrolyte. For example, an oxide solid electrolyte that is a perovskite, NASICON, or garnet Li-containing oxide, or a sulfide solid electrolyte containing Li and S as its constituent elements can be used as the solid electrolyte. The technique of the present disclosure is expected to have greater effects particularly when a sulfide solid electrolyte is used. Specific examples of the sulfide solid electrolyte include, but are not limited to, LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-P₂S₅, and Li₃PS₄. The solid electrolyte may be either amorphous or crystalline. Only one solid electrolyte may be used alone, or two or more solid electrolytes may be used in combination.

Specific examples of the conductive aid include, but are not limited to, carbon materials such as vapor-grown carbon fibers (VGCFs), acetylene black (AB), Ketjen black (KB), carbon nanotubes (CNTs), and carbon nanofibers (CNFs), and metal materials that can withstand the environment in which all-solid-state lithium-ion batteries are used. Only one conductive aid may be used alone, or two or more conductive aids may be used in combination.

Specific examples of the binder include, but are not limited to, acrylonitrile butadiene rubber (ABR) binders, butadiene rubber (BR) binders, polyvinylidene difluoride (PVDF) binders, styrene butadiene rubber (SBR) binders, and polytetrafluoroethylene (PTFE) binders. Only one binder may be used alone, or two or more binders may be used in combination.

### (2) Forming Step

The electrode mixture may be dry-formed, or may be wet-formed. The electrode mixture may be formed alone, or may be formed together with a current collector. The electrode mixture may be integrally formed on the surface of a solid electrolyte layer that will be described later. As an example of the forming step, there is a form in which an electrode is produced through the process of coating the surface of a current collector with a slurry containing the electrode mixture and then drying the slurry and performing pressing as desired. As another example of the forming step, there is a form in which an electrode is produced by placing the electrode mixture in the form of a powder into a die etc. and performing dry press forming.

### 6. Method for Producing All-Solid-State Battery

The technique of the present disclosure also has an aspect as a method for producing an all-solid-state battery. In the present disclosure, the "all-solid-state battery" refers to a battery including a solid electrolyte layer (layer containing at least a solid electrolyte). The all-solid-state battery may contain a small amount of liquid component such as electrolyte solution, but preferably contains no liquid component. The method for producing an all-solid-state battery of the present disclosure may include obtaining electrodes by the method for producing an electrode of the present disclosure described above, and stacking the electrodes and a solid electrolyte layer.

The solid electrolyte layer may be, for example, a layer containing a solid electrolyte and a binder. The types of solid electrolyte and binder are as described above. An all-solid-state battery can be produced through the processes such as stacking electrodes and a solid electrolyte layer, connecting terminals to the electrodes, enclosing the resultant stack in a battery case, and restraining the battery.

The all-solid-state battery of the present disclosure includes a power generating element including a positive electrode layer, a solid electrolyte layer, and a negative electrode layer. The power generating element usually includes a positive electrode current collector and a negative electrode current collector. The positive electrode current collector is located on, for example, the opposite surface of the positive electrode layer from the solid electrolyte layer. Examples of the material of the positive electrode current collector include metals such as aluminum, steel use stainless (SUS), and nickel. Examples of the form of the positive electrode current collector include foil and mesh. The negative electrode current collector is located on, for example, the opposite surface of the negative electrode layer from the solid electrolyte layer. Examples of the material of the negative electrode current collector include metals such as copper, SUS, and nickel. Examples of the form of the negative electrode current collector include foil and mesh.

The all-solid-state battery of the present disclosure may include an outer body housing the power generating element. Examples of the outer body include a laminated outer body and a case-type outer body. The all-solid-state battery of the present disclosure may include a restraining jig that applies a restraining pressure in the thickness direction to the power generating element. Various jigs can be used as the restraining jig. The restraining pressure is, for example, 0.1 MPa or more and 50 MPa or less, and may be 1 MPa or more and 20 MPa or less. When the restraining pressure is low, satisfactory ionic conduction paths and satisfactory electronic conduction paths may not be formed. On the other hand, when the restraining pressure is high, a larger restraining jig is required, and the volumetric energy density may be reduced.

The type of all-solid-state battery of the present disclosure is not particularly limited, but is typically a lithium-ion secondary battery. Applications of the all-solid-state battery are, for example, but not particularly limited to, power supplies for vehicles such as hybrid electric vehicles (HEVs), plug-in hybrid electric vehicles (PHEVs), battery electric vehicles (BEVs), gasoline vehicles, and diesel vehicles. The all-solid state battery of the present disclosure is preferably used particularly as traction power supplies for hybrid electric vehicles, plug-in hybrid electric vehicles, or battery electric vehicles. The all-solid-state battery of the present disclosure may be used as power sources for moving bodies other than vehicles (e.g., trains, ships, and aircrafts), or may be used as power sources for electrical products such as information processing devices.

The present disclosure is not limited to the above embodiment. The above embodiment is illustrative, and anything having substantially the same configuration as, and having similar functions and effects to, the technical idea described in the claims of the present disclosure is included in the technical scope of the present disclosure.

### Comparative Example

### Preparation of Coating Solution

987.4 g of deionized water and 44.2 g of niobic acid (Nb₂O₅·3H₂O (Nb₂O₅ water content: 72%)) were added to a container containing 870.4 g of a hydrogen peroxide solution with a concentration of 30 wt%. 87.9 g of ammonia water with a concentration of 28 wt% was then added to the container. After the addition of ammonia water, the contents of the container were sufficiently stirred. A transparent solution was thus obtained. 10.1 g of lithium hydroxide monohydrate (LiOH·H₂O) was added to the obtained transparent solution. A complex solution containing a niobium peroxo complex and lithium ions was thus obtained as a coating solution.

### Preparation of Slurry

As an active material, LiNi_{0.8}Co_{0.1}Al_{0.1}O₂ (active material A) was placed in a mixer container. The active material was thus added to the coating solution prepared as described above so that the solid content concentration of a slurry would be 66 wt%. The contents of the mixer container were then stirred with a magnetic stirrer. The mixer container was not cooled during stirring. A slurry with a liquid temperature of 25°C was thus obtained. The active material contained S as an impurity, and the content of S was 0.68 wt%. The specific surface area was 0.59 m²/g.

### Preparation of Precursor of Coated Active Material

A precursor was obtained by feeding the slurry prepared as described above to a spray dryer (Micro Mist Spray Dryer MDL-050MC made by GF Corporation) at 0.5 g/sec using a liquid feed pump and performing transformation of the slurry into droplets (first step) and gas stream drying of the slurry droplets (second step) using the spray dryer. The operating conditions of the spray dryer are as follows.

### Drying gas temperature: 250°C

### Drying gas flow rate: 1.1 m³/min

A nozzle of the spray dryer got clogged with a precipitate, and the spray dryer stopped working after 12 minutes from the start of the operation. The production rate (g/min) was calculated by dividing the sprayed amount of slurry (g) by the time until the spray dryer stopped working (12 minutes). The calculated production rate was used as an index of the production capacity. The results are shown in Table 1.

### Baking of Precursor

The precursor was baked at 230°C for six hours in a muffle furnace to synthesize lithium niobate at the surface of the active material. A coated active material was thus obtained.

### Example

A coating solution was prepared in a manner similar to that of the comparative example. The active material A was placed in a mixer container. The active material was thus added to the coating solution prepared as described above so that the solid content concentration of a slurry would be 66 wt%. The contents of the mixer container were then stirred with a magnetic stirrer while cooling the mixer container so that the slurry temperature was 18°C. A slurry with a liquid temperature of 18°C was thus obtained. Preparation of a precursor of a coated active material and baking of the precursor were performed in a manner similar to that of the comparative example. A coated active material was thus obtained.

During preparation of the precursor of the coated active material, nozzle clogging was reduced, which allowed a longer spraying operation than in the comparative example. The production rate (g/min) was calculated by a method similar to that of the comparative example, namely by dividing the sprayed amount of slurry (g) by the time until the spray dryer stopped working. The results are shown in Table 1.

**Table 1**

| | Slurry Temperature | Production Rate |
|---|---|---|
| | (°C) | (g/min) |
| Comparative Example | 25 | 5 |
| Example | 18 | 16 |

The results in Table 1 confirmed that the productivity of the example was higher than that of the comparative example.

## Claims

1. A method for producing a coated active material in which a coating layer containing niobium is made on at least a part of a surface of an active material, the method comprising:
transforming a slurry containing the active material and a coating solution (11b, 21b, 31b) containing niobium into droplets to obtain slurry droplets (11, 21, 31);
drying the slurry droplets (11, 21, 31) in a heated gas stream to obtain a precursor; and
baking the precursor, wherein when obtaining the slurry droplets (11, 21, 31), a temperature of the slurry before the slurry is transformed into droplets is 5°C or more and less than 25°C.

2. The method according to claim 1, wherein the active material contains a transition metal.

3. The method according to claim 1 or 2, wherein the active material is a lithium-transition metal composite oxide containing lithium, a transition metal, and oxygen.

4. The method according to claim 2 or 3, wherein the active material contains at least one of the following elements as the transition metal: nickel, cobalt, and manganese.

5. The method according to any one of claims 2 to 4, wherein the active material contains at least nickel as the transition metal.

6. The method according to claim 5, wherein a nickel content of the active material is 50 mol% or more based on a total of metal elements, other than lithium, contained in the active material.

7. A method for producing an electrode containing the coated active material produced by the method according to any one of claims 1 to 6, the method comprising:
mixing the coated active material and a solid electrolyte to obtain an electrode mixture; and
forming the electrode mixture.

8. The method according to claim 7, wherein the solid electrolyte is a sulfide solid electrolyte containing lithium and sulfur as constituent elements.
